# EUROPÄISCHE PATENTSCHRIFT

(11) **EP 2 301 136 B1**
(45) Veröffentlichungstag und Bekanntmachung des Hinweises auf die Patenterteilung: **15.04.2020**
(21) Anmeldenummer: 09776781.8
(22) Anmeldetag: 18.06.2009
(51) Int. Cl.: H02K 1/14, H02K 3/52, H02K 15/02

(54) **ELEKTROMOTOR**
ELECTRIC MOTOR
MOTEUR ÉLECTRIQUE

(30) Priorität: 17.07.2008 DE 102008033604
(43) Veröffentlichungstag der Anmeldung: 30.03.2011
(73) Patentinhaber: SEW-EURODRIVE GmbH & Co. KG, 76646 Bruchsal (DE)
(72) Erfinder: STARK, Tobias, 76684 Östringen (DE); HETTEL, Domenik, 76474 Au am Rhein (DE)
(86) Internationale Anmeldenummer: PCT/EP2009/004430
(87) Internationale Veröffentlichungsnummer: WO 2010/006679

(56) Entgegenhaltungen:
- EP-A2- 1 883 145
- WO-A1-2007/048567
- US-A1- 2002 084 716
- US-B1- 6 400 059

## Beschreibung

Die Erfindung betrifft einen Elektromotor und ein Herstellungsverfahren eines Elektromotors.

Elektromotoren, deren Stator ein Blechpaket umfasst, sind allgemein bekannt. Vorzugsweise ist ein solches Blechpaket stanzpaketiert.

Aus der WO 2007/048567 A1 ist ein Verfahren zum Herstellen eines Elektromotors bekannt, wobei der Stator aus Zahnsegmenten zusammengesetzt ist.

Aus der US 2002/ 084716 A1 ist eine Endkappenanordnung für einen Stator eines Elektromotors bekannt.

Aus der EP 1 883 145 A2 ist als nächstliegender Stand der Technik eine Zahnwicklung eines Stators bekannt.

Aus der US 6 400 059 B1 ist ein Stator eines Elektromotors bekannt, der aus bewickelten Einzelzähnen zusammengesetzt ist.

Der Erfindung liegt daher die Aufgabe zugrunde, die Herstellung eines Elektromotors zu vereinfachen und die Fertigungsqualität beim Herstellen zu verbessern.

Erfindungsgemäß wird die Aufgabe bei dem Elektromotor nach den in Anspruch 1 und bei dem Verfahren nach den in Anspruch 13 angegebenen Merkmalen gelöst.

Von Vorteil ist bei dem Elektromotor nach Anspruch 1 und bei dem dazugehörigen Herstellungsverfahren nach Anspruch 13, dass mittels der Endkappe ein Schutz des Blechpakets geschaffen ist. Außerdem ist der Zusammenhalt des Blechpakets verbessert. Darüber hinaus wird die Wicklung bei ihrer Herstellung durch die Ausformung der Endkappe möglichst genau definiert und geführt. Somit sind räumliche Bahnabweichungen des Wickelwerkzeuges, wie beispielsweise Nadelwickler, kompensierbar, wodurch stets dieselbe Wicklung entsteht, insbesondere also die Reproduzierbarkeit einer gewünschten Wicklung verbessert ist und/oder die Wickelgeschwindigkeit erhöhbar ist, da größere Bahnabweichungen akzeptierbar sind. Zur Definition und Führung tragen mehrere Ausformungsmerkmale der Endkappe bei. Zunächst ist der Raumbereich der Wicklung mittels der Dome insgesamt begrenzt. Darüber hinaus ist die Umlenkung an einem definierten Bereich am Fuße des Doms ausgeführt. Weiter tragen die Rillen dazu bei, dass ein radiales Verrutschen ausgeschlossen werden kann. Der Rillenabstand ist derart klein, bei korrekter Bahnführung immer dieselbe Wicklung entsteht. Aber auch bei größerer Bahngeschwindigkeit des Wickelwerkzeuges und somit größeren Bahnabweichungen ist eine im Wesentlichen gleichartige Wicklung erzeugbar, indem zwar die erste Windung der Wicklung um einen Rillenabstand radial verrutscht, aber dann die Wicklung wiederum gleichartig aufgebaut ist. Da der Rillenabstand wesentlich kleiner als der Wicklungsdrahtdurchmesser ist, führt auch die um einen Rillenabstand verrutschte Wicklungsdrahtposition zu einer im Wesentlichen gleichartigen Wicklung. Von Vorteil ist bei einem aus Kunststoff gefertigten Haltering, dass der im Vergleich zum Blechpaket viel weichere Kunststoff zum Schutz der Kanten des Blechpakets verwendbar ist. Von Vorteil ist bei einem Einschieben des Stator samt Haltering in die Ausnehmung des Motorgehäuses, dass die kreisförmige Anordnung der Einzelsegmente beim fertig hergestellten Elektromotor zumindest teilweise durch die Ausnehmung bewirkbar ist. Von Vorteil ist das Vorsehen als Schmiermittel von radial überstehenden Halteringbereichen beim Einschieben in die Ausnehmung, dass der Haltering sozusagen als Schmiermittelbehälter fungiert, der genug Schmierstoff beim Einfügen bereitstellt.

Weiter ist von Vorteil, dass die Endkappe Ausformungsmerkmale aufweist, an der durch ein Halteelement das Zusammenhalten und Ausrichten der Einzelsegmente ausführbar ist.

Bei einer vorteilhaften Ausgestaltung ist die erste Lage der Wicklung des Einzelsegments auf dem mit Rillen versehenen Oberflächenbereich der Endkappe vorgesehen. Von Vorteil ist dabei, dass mittels der Rillen eine genaue Ausrichtung Wicklung ermöglicht ist.

Bei einer vorteilhaften Ausgestaltung ist an der Endkappe eine Rastnase vorgesehen, die mit einem Einklipsbereich am Haltering zusammenwirkt. Von Vorteil ist dabei, dass der Haltering die Einzelsegmente in Kreisform anordenbar macht, insbesondere schon vor dem Einführen des Stators in das Motorgehäuse.

Bei einer vorteilhaften Ausgestaltung sind die Blechpakete der Einzelsegmente formschlüssig miteinander verbunden, insbesondere formschlüssig in radialer und in Umfangsrichtung. Von Vorteil ist dabei, dass ein Zusammenhalt des Stators bewirkbar ist.

Bei einer vorteilhaften Ausgestaltung sind die Blechpakete der Einzelsegmente formschlüssig miteinander verbunden mittels einer Feder-Nut-Verbindung. Von Vorteil ist dabei, dass eine einfache und sichere, insbesondere auch spielfrei ausführbare, Verbindung einsetzbar ist.

Bei einer vorteilhaften Ausgestaltung ist der Abstand einer Rille zur radial nächsten Rille und der Rundungsdurchmesser der jeweiligen Rille kleiner als der halbe Wicklungsdrahtdurchmesser. Insbesondere beträgt der Abstand ein Drittel eines Wicklungsdrahtdurchmessers oder weniger. Von Vorteil ist dabei, dass eine reproduzierbare Wicklung sehr schnell mit Nadelwickler erzeugbar ist.

Bei einer vorteilhaften Ausgestaltung sind die am ersten axialen Endbereich des Einzelsegments vorgesehene Endkappe und die am zweiten axialen Endbereich des Einzelsegments vorgesehene Endkappe mittels mindestens zweier Verbindungsstege oder mittels mindestens eines in radialer Richtung mindestens zehnfach mehr als in Umfangsrichtung breiten Verbindungsstegs verbunden sind, wobei der oder die Verbindungsstege in einer oder mehreren entsprechenden Ausnehmungen des Blechpakets vorgesehen sind. Von Vorteil ist dabei, dass die Verdrehsteifigkeit des Einzelsegments nach Anbringen der Verbindungsstege verstärkt ist.

Bei einer vorteilhaften Ausgestaltung sind die Endkappen und/oder der oder die Verbindungsstege durch Umspritzen des Blechpakets hergestellt, insbesondere also die Endkappen und ein Verbindungssteg einstückig ausgeführt sind. Von Vorteil ist dabei, dass eine einfache Herstellung der Kunststoffteile ermöglicht ist.

Bei einer vorteilhaften Ausgestaltung weist die Endkappe einen Halteabsatz auf, der zur formschlüssigen Verbindung mit einem Werkzeug der Bewicklungsmaschine vorgesehen ist, insbesondere während des Herstellens der Bewicklung. Von Vorteil ist dabei, dass ein durch während der Bewicklung auftretende Kräfte bewirktes Abrutschen der Endkappe verhinderbar ist.
Bei einer vorteilhaften Ausgestaltung ist das Motorgehäuse ein Aluminium-Stranggussteil. Von Vorteil ist dabei, dass in einfacher Weise Motoren mit verschiedener axialer Länge ohne besonderen Zusatzaufwand herstellbar sind und somit ein Baukasten von Motoren mit verschiedenem Drehmoment in einfacher Weise herstellbar ist.

Bei einer vorteilhaften Ausgestaltung ist die automatische Bewicklung mit Hilfe eines Nadelwicklers durchgeführt. Von Vorteil ist dabei, dass komplexe Bahnverläufe beim Bewickeln schnell abfahrbar sind.

Bei einer vorteilhaften Ausgestaltung weist der Verbindungssteg in axialer Richtung und/oder in radialer Richtung verlaufende Verstärkungsrippen auf, insbesondere in Umfangsrichtung hervorstehende. Von Vorteil ist dabei, dass die Verdrehsteifigkeit verbessert ist.

Die Erfindung wird nun anhand von Abbildungen näher erläutert:
In der Figur 1 ist ein Stator eines erfindungsgemäßen Elektromotors gezeigt, der aus von einem Haltering zusammengehaltenen Einzelsegmenten aufgebaut ist.
In der Figur 2 ist ein solches Einzelsegment ohne Haltering gezeigt aus einer ersten Blickrichtung.
In der Figur 3 ist dieses Einzelsegment gezeigt aus einer anderen Blickrichtung.
In der Figur 4 ist das Einzelsegment unbewickelt gezeigt.
In der Figur 5 ist eine erste Endkappe für das Einzelsegment gezeigt aus einer ersten Blickrichtung.

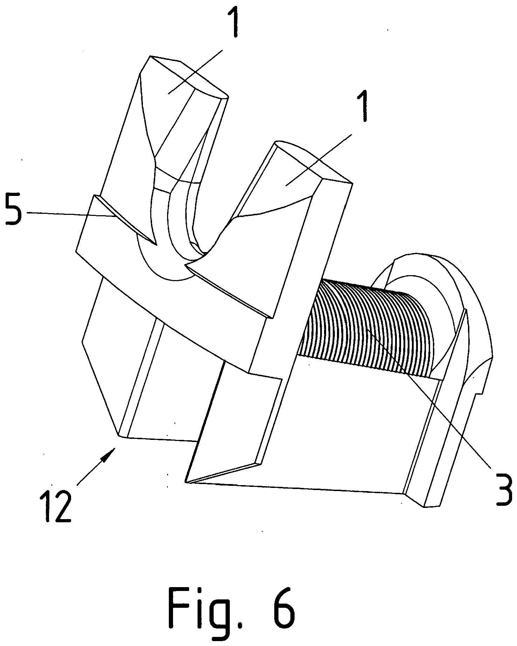

In der Figur 6 ist diese erste Endkappe gezeigt aus einer zweiten Blickrichtung.
In der Figur 7 ist der Haltering in Draufsicht gezeigt.
In der Figur 8 ist der Haltering in einer perspektivischen Ansicht gezeigt.
In der Figur 9 ist ein Querschnitt durch einen Bereich des Einzelsegments gezeigt.

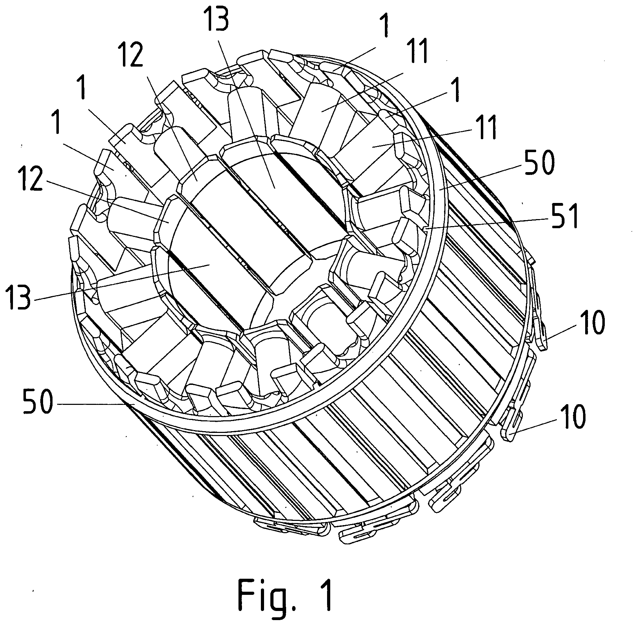

Wie in der Figur 1 gezeigt ist, ist der Stator des erfindungsgemäßen Elektromotors aus in Umfangsrichtung nacheinander angeordneten Einzelsegmenten zusammengesetzt. Dabei ist auf den Stator ein Haltering 50 aufgeschoben, dessen Einklipsverbindungsbereiche 51 jeweils ein Einzelsegment formschlüssig verbunden hält, so dass die Zylinderform des Stators, also die kreisförmige Ausrichtung der Einzelsegmente erreicht wird.

Jedes Einzelsegment umfasst ein Blechpaket 13, auf das an beiden axialen Endbereichen jeweils eine Kunststoff-Endkappe (12, 30) aufgeschoben ist. Die erste Endkappe ist dabei axial motorabtriebsseitig und die zweite Endkappe axial an der gegenüberliegenden Seite vorgesehen. Die Bewicklung jedes Einzelsegments wird automatisch ausgeführt, wobei ein Nadelwickler einsetzbar ist.

Vorzugsweise ist die Endkappe (12, 30) spiegelsymmetrisch aufgebaut, wobei die Spiegelebene die Achse des Motors umfasst.

Die Endkappe nimmt auch die durch die Drahtspannung entstehenden Kräfte auf.

Die erste Endkappe 12 weist Dome 1 auf, die zur Umlenkung des Wickeldrahtes dienen, wobei am Fuß der Dome 1 Drahteinlaufkanäle 2 vorgesehen sind. Diese Drahteinlaufkanäle bewirken eine optimale Positionierung der ersten Windung der Wicklung.

Alle weiteren Wicklungen basieren auf der ersten Windung, positionieren sich also relativ zur Position der ersten Windung. Somit ist bei optimaler Positionierung der ersten Windung ein hoher Füllgrad bewirkbar.

Die erste Lage von Windungen werden auf dem mit Rillen 3 versehenen Oberflächenbereich der Endkappe abgelegt. Somit ist bei Ausführen der zweiten Lage von Windungen, die auf der ersten Lage aufliegt, ein axiales Verrutschen der Wicklungsdrähte der ersten Lage verhindert.

Der Abstand einer Rille zur nächsten Rille, also quer zur Rille in radialer Richtung des Elektromotors, und der Rundungsdurchmesser der jeweiligen Rille sind viel kleiner als der Wicklungsdrahtdurchmesser.

Die Rastnasen 4 dienen zur Arretierung des Halterings 50 und einer aus Verguss des Stators nach dessen Fertigstellung erzeugten Kappe.

Die Endkappe weist auch einen Halteabsatz 5 auf, der zum formschlüssigen Fixieren der Endkappe am jeweiligen Einzelsegment dient, welcher durch einen entsprechend ausgeformten Werkstückträger erzeugbar ist. Somit ist ein Abrutschen durch die beim Bewickeln auftretenden Kräfte verhindert.

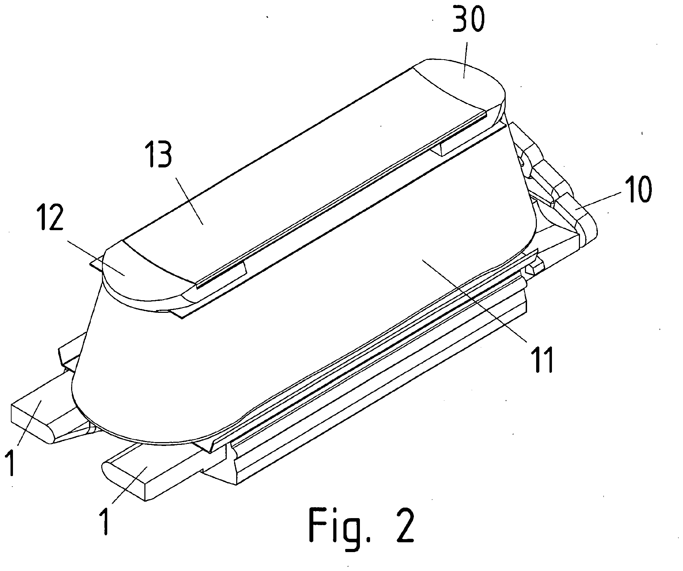

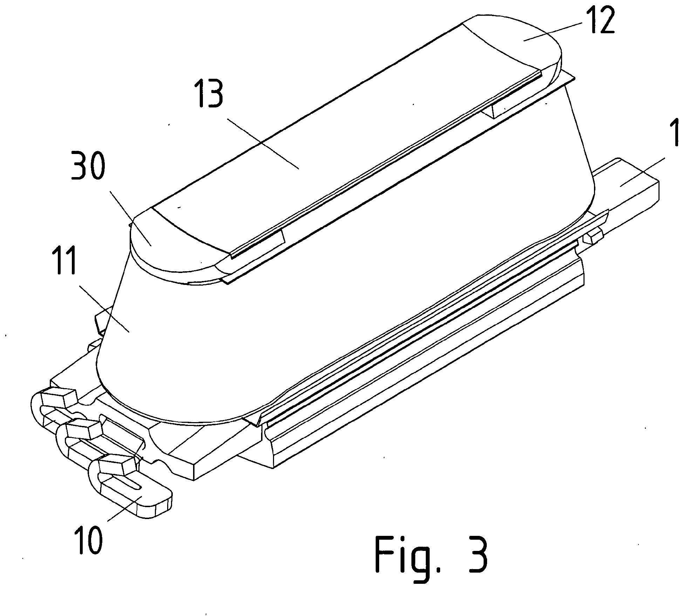

In Figur 2 und 3 ist die von Papier umgebene Wicklung 11 beim Einzelsegment gezeigt. Am axialen Ende ist auf das Blechpaket 13 die zweite Schutzkappe 12 aufgeschoben, in deren Ausnehmung 31 das Stanz-Biegeteil 10 eingeschoben ist und somit Anschlussdrähte elektrisch verbindbar sind mit dem an dieses Stanz-Biegeteil 10 elektrisch verbundenen, insbesondere angelöteten oder angeschweißten Wicklungsdraht.

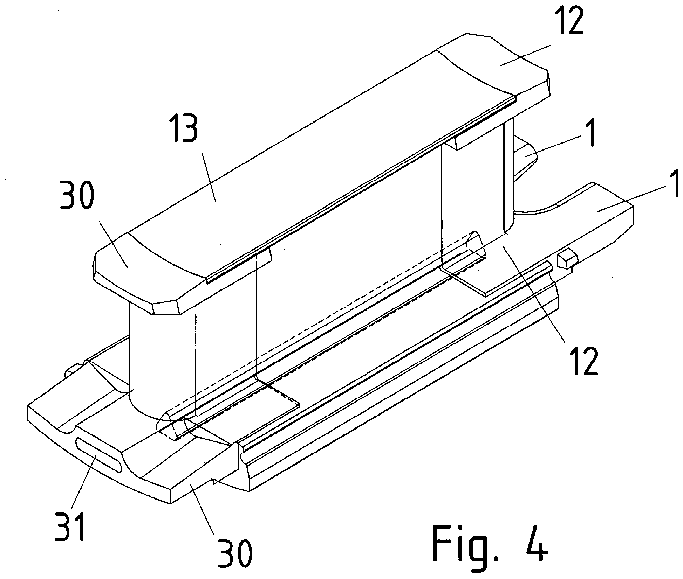

In Figur 4 ist das unbewickelte Einzelsegment mit einer ersten Endkappe 12 und einer zweiten Endkappe 30 gezeigt, die auf die beiden axialen Endbereiche des Einzelsegments aufgeschoben sind.

Die erste Endkappe 30 weist an ihrer Stirnseite, also an einem ihrer axialen Endbereiche, eine Ausnehmung 31 auf in die das Stanz-Biegeteil 10 eingeschoben ist und zur elektrischen Kontaktierung der Wicklung Wicklungsdrähte sowie Anschlussdrähte, angeschweißt sowie angelötet sind.
Am Stanz-Biegeteil 10, insbesondere Kontakthaken, wird mindestens ein Ende des Wicklungsdrahtes elektrisch verbunden, insbesondere angeschweißt oder lötverbunden.
Die elektrischen Anschlussverbindungen werden ebenfalls an das Stanz-Biegeteil 10 elektrisch angeschlossen und verbunden.

Vorzugsweise wird die Kontaktstelle des Litzendrahtes oder des Wickeldrahtes in das Stanz-Biegeteil 10 eingelegt und dieser dann durch Biegen des Stanz-Biegeteils 10 eingeklemmt. Danach wird dann eine Schweißverbindung oder anderweitige Lötverbindung zwischen dem Stanz-Biegeteil 10 und dem Litzendraht hergestellt. In entsprechender Weise wird auch der Wicklungsdraht elektrisch verbunden mit dem Stanz-Biegeteil 10.
Die zweite Endkappe 12 weist Dome 1 auf, die zur Umlenkung und zum Einlaufen des ersten Wickeldrahtes dienen, also beim Herstellen der Windung der Wicklung als Drahtführung wirksam sind.

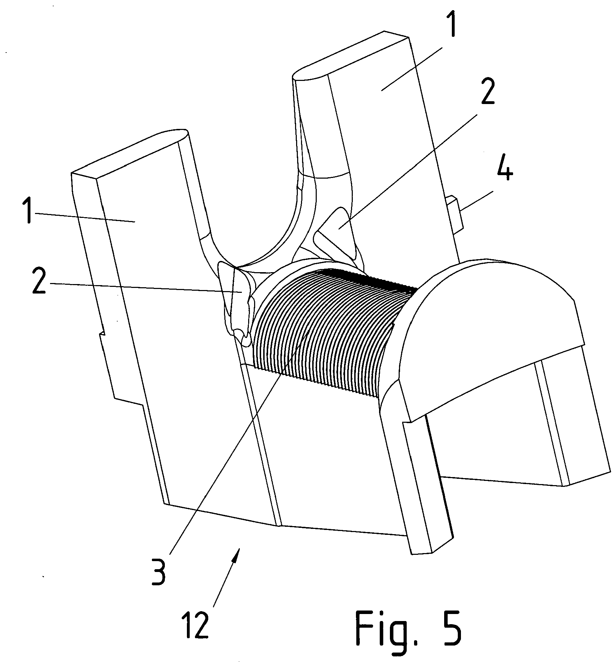

In der Figur 5 ist die erste Endkappe 12 vergrößert dargestellt, wobei ersichtlich ist, dass die Dome 1 radial über den Wicklungsbereich herausstehen.

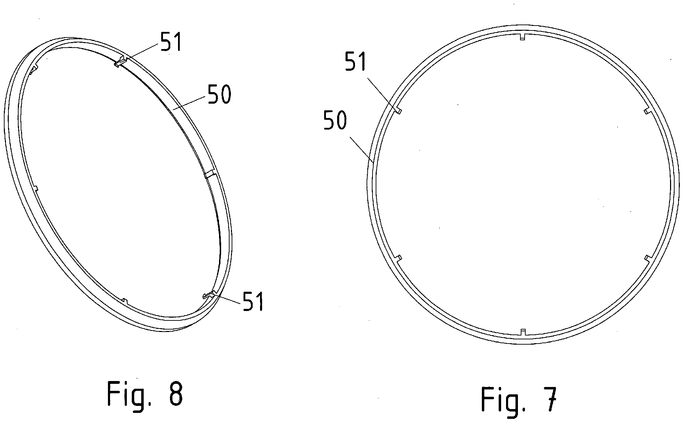

In den Figuren 7 und 8 sind die in Umfangsrichtung voneinander gleichmäßig beabstandeten, sechs Einklipsverbindungsbereiche 51 am Haltering 50 sichtbar.

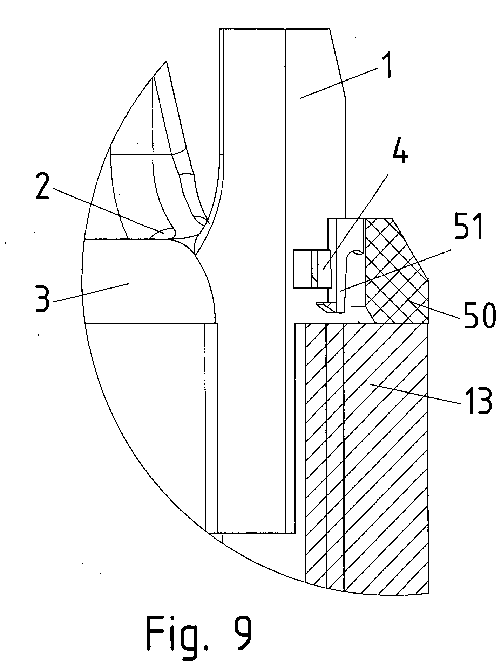

In der Figur 9 ist ein Querschnitt gezeigt durch die erste Endkappe 12 mit ihrem Dom 1 und dem Drahteinlaufkanal 2 sowie der Rastnase 4, die den Haltering 50 formschlüssig hält an dessen Einklipsverbindungsbereich 51. In Figur 9 berühren sich dieser Einklipsverbindungsbereich 51 und die Rastnase 4 zwar nicht, jedoch ist der gezeigte Abstand im Bereich der Fertigungstoleranz, so dass bei der vorhandenen Vielzahl von Einklipsverbindungen am Umfang des Halterings 50 die Verbindung ein sehr kleines oder sogar verschwindendes Spiel aufweist.

Zur Herstellung des Elektromotors wird der in Figur 1 gezeigte Stator in die lochförmige Ausnehmung eines Motorgehäuses eingeschoben. Die Ausnehmung wird als Bohrung bearbeitet, insbesondere fräsend und/oder gedreht. Zum Einschieben wird das Motorgehäuse erhitzt wodurch sich die Ausnehmung aufweitet und nach Abkühlen der Stator kraftschlüssig gehalten ist. Die Fügetemperatur beträgt zwischen 150°C und 300°C.
Der aus Kunststoff gefertigte Haltering 50 ist zur Erleichterung des Einfädelns des vom Haltering 50 zusammengehaltenen Stators am gesamten Umfang mit einer Schräge oder Fase versehen, die in axialer Richtung mit zunehmendem Radius ausgestaltet ist. Der Stator wird also mittels dieser Schräge an der Ausnehmung des Motorgehäuses angesetzt und dann eingeschoben.
Der Kunststoff des Halterings 50 schmilzt bei der Fügetemperatur zwar noch nicht, weist aber auch nicht mehr seine Nennfestigkeit auf. Somit wird das Übermaß des Halterings, also radial über die Bohrung herausstehende Bereiche beim Einschieben verdrückt und verschmiert entlang der axialen Richtung am äußeren Umfang des Blechpakets des Stators. Auf diese Weise ist also eine Schmierwirkung und somit ein Schutz der Bohrung gegen die scharfen Kanten des Blechpakets erreicht und das Einschieben ist mit geringerer Reibungskraft ermöglicht.

Der Haltering 50 beinhaltet also einerseits die Funktion des Haltens der Einzelsegmente und andererseits dienen Teilbereiche seines Materials sozusagen als Schmierstoff beim Einschieben. Nach dem Einschieben ist der Stator teils durch die Reste des Halterings und teilweise mittels des Motorgehäuses gehalten. Weitere Haltefunktion wird durch einen Verguss des Stators mit Vergussmasse erreicht. Die Haltefunktion des Motorgehäuses ist also nicht für sich alleine genommen ausreichend.

Vorzugsweise ist das Motorgehäuse als Aluminium-Stranggussprofil hergestellt.

### Bezugszeichenliste

1 Dom der ersten Endkappe
2 Drahteinlaufkanal
3 Rillen
4 Rastnase
5 Halteabsatz
10 Stanz-Biegeteil
11 von Papier umgebene Wicklung
12 erste Endkappe
13 Blechpaket
30 zweite Endkappe
31 Ausnehmung
50 Haltering
51 Einklipsverbindungsbereich

## Patentansprüche

1. Elektromotor, umfassend einen aus in Umfangsrichtung angeordneten Einzelsegmenten zusammengesetzten Stator, der in einer lochförmigen, als Bohrung bearbeiteten Ausnehmung des Motorgehäuses eingeschoben ist,
wobei jedes Einzelsegment ein Blechpaket (13) umfasst, um das eine Wicklung (11) vorgesehen ist und an dessen axialen Endbereichen Endkappen (12, 30) vorgesehen sind,
wobei die Wicklung (11) mittels eines Wicklungsdrahtes hergestellt ist,
wobei eine Endkappe (12) zumindest einen Dom (1), insbesondere zum Begrenzen des Bereiches der Wicklung (11), umfasst, wobei im Fußbereich des Doms (1) ein Drahteinlaufkanal (2) zur Umlenkung des Wicklungsdrahtes vorgesehen ist,
wobei an der Endkappe (12) Rillen (3) vorgesehen sind,
**dadurch gekennzeichnet, dass**
der Abstand einer Rille (3) zur radial nächsten Rille (3) und der Rundungsdurchmesser der jeweiligen Rille (3) kleiner sind als der Wicklungsdrahtdurchmesser,
wobei auf den Stator ein Haltering (50) aufgeschoben angeordnet ist, der Einklipsverbindungsbereiche (51) aufweist, die jeweils ein Einzelsegment formschlüssig verbunden halten,
wobei der Stator samt Haltering (50) in der Ausnehmung des Motorgehäuses eingeschoben ist,
wobei während des Einschiebens des aus Einzelsegmenten gefertigten und durch Halteringe (50) zusammengehaltenen Stators als Fügetemperatur eine erhöhte Temperatur von ca. 150°C bis 300°C des Motorgehäuses vorgesehen ist,
wobei der Haltering (50) aus Kunststoff gefertigt ist, welcher bei der Fügetemperatur noch nicht schmilzt, aber auch nicht mehr seine Nennfestigkeit aufweist,
wobei radial über die Bohrung herausstehende Bereiche des Halterings (50) zwischen Stator und Motorgehäuse in der Ausnehmung verdrückt und entlang der axialen Richtung verschmiert angeordnet sind zur Erreichung einer Schmierwirkung und somit eines Schutzes der Bohrung gegen die scharfen Kanten des Blechpakets (13),
wobei eine weitere Haltefunktion durch einen Verguss des Stators mit Vergussmasse erreicht ist, da die Haltefunktion des Motorgehäuses nicht für sich alleine genommen ausreichend ist.

2. Elektromotor nach Anspruch 1,
**dadurch gekennzeichnet, dass**
die erste Lage der Wicklung (11) des Einzelsegments auf dem mit Rillen (3) versehenen Oberflächenbereich der Endkappe (12) vorgesehen ist.

3. Elektromotor nach mindestens einem der vorangegangenen Ansprüche,
**dadurch gekennzeichnet, dass**
an der Endkappe (12) eine Rastnase (4) vorgesehen ist, die mit einem Einklipsbereich am Haltering (50) zusammenwirkt.

4. Elektromotor nach mindestens einem der vorangegangenen Ansprüche,
**dadurch gekennzeichnet, dass**
der Haltering (50) die Einzelsegmente in Kreisform zusammenhält.

5. Elektromotor nach mindestens einem der vorangegangenen Ansprüche,
**dadurch gekennzeichnet, dass**
die Blechpakete (13) des Einzelsegments formschlüssig miteinander verbunden sind, insbesondere formschlüssig in radialer und in Umfangsrichtung.

6. Elektromotor nach mindestens einem der vorangegangenen Ansprüche,
**dadurch gekennzeichnet, dass**
die Blechpakete (13) des Einzelsegments mittels einer Feder-Nut-Verbindung formschlüssig miteinander verbunden sind.

7. Elektromotor nach mindestens einem der vorangegangenen Ansprüche,
**dadurch gekennzeichnet, dass**
der Abstand einer Rille zur radial nächsten Rille und der Rundungsdurchmesser der jeweiligen Rille kleiner ist als der halbe Wicklungsdrahtdurchmesser.

8. Elektromotor nach mindestens einem der vorangegangenen Ansprüche,
**dadurch gekennzeichnet, dass**
die am ersten axialen Endbereich des Einzelsegments vorgesehene Endkappe (12) und die am zweiten axialen Endbereich des Einzelsegments vorgesehene Endkappe (30) mittels mindestens zweier Verbindungsstege oder mittels mindestens eines in radialer Richtung mindestens zehnfach mehr als in Umfangsrichtung breiten Verbindungsstegs verbunden sind, wobei der oder die Verbindungsstege in einer oder mehreren entsprechenden Ausnehmungen des Blechpakets (13) vorgesehen sind.

9. Elektromotor nach mindestens einem der vorangegangenen Ansprüche,
**dadurch gekennzeichnet, dass**
die Endkappen (12, 30) und/oder der oder die Verbindungsstege durch Umspritzen des Blechpakets (13) hergestellt sind, insbesondere die Endkappen (12, 30) und ein Verbindungssteg einstückig ausgeführt sind.

10. Elektromotor nach mindestens einem der vorangegangenen Ansprüche,
**dadurch gekennzeichnet, dass**
die Endkappe (12) einen Halteabsatz (5) aufweist, der zur formschlüssigen Verbindung mit einem Werkzeug der Bewicklungsmaschine vorgesehen ist, insbesondere während des Herstellens der Bewicklung, insbesondere zur Verhinderung eines durch während der Bewicklung auftretende Kräfte bewirkten Abrutschens der Endkappe (12).

11. Elektromotor nach mindestens einem der vorangegangenen Ansprüche,
**dadurch gekennzeichnet, dass**
das Motorgehäuse ein Aluminium-Stranggussteil ist.

12. Elektromotor nach mindestens einem der vorangegangenen Ansprüche,
**dadurch gekennzeichnet, dass**
der Verbindungssteg in axialer Richtung und/oder in radialer Richtung verlaufende Verstärkungsrippen aufweist, insbesondere in Umfangsrichtung hervorstehende.

13. Herstellungsverfahren eines Elektromotors, der ein Motorgehäuse mit einer lochförmigen, als Bohrung bearbeiteten Ausnehmung aufweist, in welche ein aus in Umfangsrichtung angeordneten Einzelsegmenten zusammengesetzter Stator eingeschoben wird,
wobei jedes Einzelsegment ein Blechpaket (13) umfasst,
wobei zuerst an beiden axialen Enden Endkappen (12, 30) auf das Blechpaket (13) aufgeschoben werden und danach die Bewicklung jedes Einzelsegments automatisch ausgeführt wird zur Erzeugung einer Wicklung (11),
wobei die Wicklung (11) mittels eines Wicklungsdrahtes hergestellt wird,
wobei eine Endkappe (12) zumindest einen Dom (1), insbesondere zum Begrenzen des Bereiches der Wicklung (11), umfasst, wobei im Fußbereich des Doms (1) ein Drahteinlaufkanal (2) zur Umlenkung des Wicklungsdrahtes vorgesehen ist,
wobei an der Endkappe (12) Rillen (3) vorgesehen sind, wobei der Abstand einer Rille (3) zur radial nächsten Rille (3) und der Rundungsdurchmesser der jeweiligen Rille (3) kleiner sind als der Wicklungsdrahtd urchmesser,
wobei auf den Stator ein Haltering (50) aufgeschoben wird, der Einklipsverbindungsbereiche (51) aufweist, die jeweils ein Einzelsegment formschlüssig verbunden halten,
wobei während des Einschiebens des aus Einzelsegmenten gefertigten und durch Halteringe (50) zusammengehaltenen Stators als Fügetemperatur eine erhöhte Temperatur von ca. 150°C bis 300°C des Motorgehäuses vorgesehen ist,
wobei der Haltering (50) aus Kunststoff gefertigt ist, welcher bei der Fügetemperatur noch nicht schmilzt, aber auch nicht mehr seine Nennfestigkeit aufweist,
wobei beim Einschieben des Stators in die Ausnehmung des Motorgehäuses der Stator zusammen mit dem aufgeschobenen Haltering (50) eingeschoben wird und beim Einschieben in die Ausnehmung radial über die Bohrung herausstehende Bereiche des Halterings (50) zwischen Stator und Motorgehäuse verdrückt und entlang der axialen Richtung verschmiert werden und somit eine Schmierwirkung und ein Schutz der Bohrung gegen die scharfen Kanten des Blechpakets (13) erreicht wird,
wobei eine weitere Haltefunktion durch einen Verguss des Stators mit Vergussmasse erreicht wird, wobei die Haltefunktion des Motorgehäuses also nicht für sich alleine genommen ausreichend ist.

## Claims

1. Electric motor, having a stator which is composed of individual segments arranged in the circumferential direction and which is pushed into a hole-like recess of the motor housing that has been machined as a bore,
wherein each individual segment comprises a laminated core (13), around which a winding (11) is provided and on the axial end regions of which end caps (12, 30) are provided,
wherein the winding (11) is produced by means of a winding wire, wherein an end cap (12) comprises at least one dome (1), in particular for bounding the region of the winding (11), wherein a wire inlet channel (2) for diverting the winding wire is provided in the foot region of the dome (1),
wherein grooves (3) are provided on the end cap (12),
**characterized in that** the distance of one groove (3) from the radially subsequent groove (3) and the diameter of curvature of the respective groove (3) are smaller than the winding wire diameter,
wherein a retaining ring (50) is pushed onto the stator and has snap-in connection regions (51) which each secure an individual segment in a manner connected by a form fit,
wherein the stator together with the retaining ring (50) is pushed into the recess of the motor housing,
wherein, while the stator made from individual segments and held together by retaining rings (50) is being pushed in, an elevated temperature of approximately 150°C to 300°C of the motor housing is provided as joining temperature,
wherein the retaining ring (50) is made of plastic which does not yet melt at the joining temperature but also no longer has its nominal strength,
wherein regions of the retaining ring (50) that protrude radially beyond the bore are compressed in the recess between the stator and the motor housing and are smeared along the axial direction in order to achieve a lubricating effect and thus to protect the bore against the sharp edges of the laminated core (13),
wherein an additional retaining function is achieved by potting the stator with potting compound, since the retaining function of the motor housing is not sufficient on its own.

2. Electric motor according to claim 1,
**characterized in that**
the first layer of the winding (11) of the individual segment is provided on the surface region of the end cap (12) that is provided with grooves (3).

3. Electric motor according to at least one of the preceding claims,
**characterized in that**
a latching protrusion (4) is provided on the end cap (12) and cooperates with a snap-in region on the retaining ring (50).

4. Electric motor according to at least one of the preceding claims,
**characterized in that**
the retaining ring (50) holds the individual segments together in the shape of a circle.

5. Electric motor according to at least one of the preceding claims,
**characterized in that**
the laminated cores (13) of the individual segment are connected to one another by a form fit, in particular by a form fit in the radial and circumferential direction.

6. Electric motor according to at least one of the preceding claims,
**characterized in that**
the laminated cores (13) of the individual segment are connected to one another by a form fit by means of a tongue-and-groove connection.

7. Electric motor according to at least one of the preceding claims,
**characterized in that**
the distance from one groove to the radially subsequent groove and the diameter of curvature of the respective groove is smaller than half the winding wire diameter.

8. Electric motor according to at least one of the preceding claims,
**characterized in that**
the end cap (12) provided on the first axial end region of the individual segment and the end cap (30) provided on the second axial end region of the individual segment are connected by means of at least two connecting webs or by means of at least one connecting web which is at least ten times wider in the radial direction than in the circumferential direction, wherein the connecting web(s) are provided in one or more corresponding recesses of the laminated core (13).

9. Electric motor according to at least one of the preceding claims,
**characterized in that**
the end caps (12, 30) and/or the connecting web(s) are produced by injection moulding around the laminated core (13), in particular the end caps (12, 30) and a connecting web are formed in one piece.

10. Electric motor according to at least one of the preceding claims,
**characterized in that**
the end cap (12) has a retaining shoulder (5) which is provided for form-fitting connection to a tool of the winding machine, in particular while the winding is being produced, in particular in order to prevent a slipping-off of the end cap (12) that is brought about by forces occurring during winding.

11. Electric motor according to at least one of the preceding claims,
**characterized in that**
the motor housing is a continuously cast aluminium part.

12. Electric motor according to at least one of the preceding claims,
**characterized in that**
the connection web has reinforcing ribs extending in the axial direction and/or in the radial direction, in particular projecting in the circumferential direction.

13. Method for producing an electric motor which has a motor housing with a hole-like recess machined as a bore, into which a stator is pushed which is composed of individual segments arranged in the circumferential direction,
wherein each individual segment comprises a laminated core (13), wherein firstly end caps (12, 30) are pushed onto the laminated core (13) at both axial ends and then each individual segment is automatically wound in order to create a winding (11),
wherein the winding (11) is produced by means of a winding wire, wherein an end cap (12) comprises at least one dome (1), in particular for bounding the region of the winding (11), wherein a wire inlet channel (2) for diverting the winding wire is provided in the foot region of the dome (1),
wherein grooves (3) are provided on the end cap (12), wherein the distance of one groove (3) from the radially subsequent groove (3) and the diameter of curvature of the respective groove (3) are smaller than the winding wire diameter,
wherein a retaining ring (50) is pushed onto the stator and has snap-in connection regions (51) which each secure an individual segment in a manner connected by a form fit,
wherein, while the stator made from individual segments and held together by retaining rings (50) is being pushed in, an elevated temperature of approximately 150°C to 300°C of the motor housing is provided as joining temperature,
wherein the retaining ring (50) is made of plastic which does not yet melt at the joining temperature but also no longer has its nominal strength,
wherein, when the stator is pushed into the recess of the motor housing, the stator is pushed in together with the pushed-on retaining ring (50) and, as these are pushed into the recess, regions of the retaining ring (50) that protrude radially beyond the bore are compressed between the stator and the motor housing and are smeared along the axial direction, and thus a lubricating effect is achieved and the bore is protected against the sharp edges of the laminated core (13),
wherein an additional retaining function is achieved by potting the stator with potting compound, wherein the retaining function of the motor housing is therefore not sufficient on its own.

## Revendications

1. Moteur électrique comprenant un stator composé de segments individuels disposés dans la direction périphérique, et inséré dans un évidement du carter dudit moteur qui revêt la forme d'un trou usiné se présentant comme un alésage,
chaque segment individuel incluant un empilement de tôles (13) autour duquel un enroulement (11) est prévu, et au niveau des régions extrêmes axiales duquel des capuchons d'extrémité (12, 30) sont prévus,
ledit enroulement (11) étant produit au moyen d'un fil métallique d'enroulement,
un capuchon d'extrémité (12) étant muni d'au moins une couronne (1) notamment conçue pour délimiter la région dudit enroulement (11), sachant qu'un canal (2) de pénétration de fil est prévu dans la région de la base de ladite couronne (1), afin de dévier ledit fil d'enroulement,
des striures (3) étant prévues sur ledit capuchon d'extrémité (12),
**caractérisé par le fait que**
la distance comprise entre une striure (3) et la striure (3) successive dans le sens radial, et le diamètre de l'arrondi de la striure (3) considérée, sont plus petits que le diamètre du fil d'enroulement,
une bague de retenue (50), enfilée sur le stator, comportant des zones (51) de liaison par clipsage qui entretiennent à chaque fois, par complémentarité de formes, la liaison d'un segment individuel,
ledit stator étant inséré dans l'évidement du carter du moteur, conjointement à ladite bague de retenue (50),
sachant qu'une température accrue dudit carter du moteur, d'environ 150 °C à 300 °C, est prévue en tant que température d'assemblage au stade de l'insertion dudit stator produit à partir de segments individuels, et dont la cohésion est assurée par des bagues de retenue (50),
la bague de retenue (50) étant fabriquée en une matière plastique qui ne fond pas encore à la température d'assemblage, mais ne présente également plus sa solidité nominale, sachant que des régions de ladite bague de retenue (50), qui font saillie radialement au-delà de l'alésage, sont logées dans l'évidement à l'état comprimé et étalé le long de la direction axiale, entre le stator et le carter du moteur, de manière à obtenir un effet de lubrification et, de ce fait, une protection dudit alésage vis-à-vis des arêtes vives de l'empilement de tôles (13),
une fonction de retenue additionnelle étant obtenue par un scellement dudit stator à l'aide d'une masse de scellement, étant donné que la fonction de retenue dudit carter du moteur est par elle-même insuffisante.

2. Moteur électrique selon la revendication 1,
**caractérisé par le fait que**
la première couche de l'enroulement (11) du segment individuel est prévue sur la région de la surface du capuchon d'extrémité (12) qui est munie de striures (3).

3. Moteur électrique selon au moins l'une des revendications précédentes,
**caractérisé par le fait**
**qu'**un mentonnet encliquetable (4), prévu sur le capuchon d'extrémité (12), coopère avec une zone de clipsage située sur la bague de retenue (50).

4. Moteur électrique selon au moins l'une des revendications précédentes,
**caractérisé par le fait que**
la bague de retenue (50) assure la cohésion des segments individuels en une configuration circulaire.

5. Moteur électrique selon au moins l'une des revendications précédentes,
**caractérisé par le fait que**
les empilements de tôles (13) du segment individuel sont reliés mutuellement par complémentarité de formes, notamment par complémentarité de formes dans les directions radiale et périphérique.

6. Moteur électrique selon au moins l'une des revendications précédentes,
**caractérisé par le fait que**
les empilements de tôles (13) du segment individuel sont reliés mutuellement par complémentarité de formes, au moyen d'une liaison par rainure et languette.

7. Moteur électrique selon au moins l'une des revendications précédentes,
**caractérisé par le fait que**
la distance comprise entre une striure et la striure successive dans le sens radial, et le diamètre de l'arrondi de la striure considérée, sont plus petits que la moitié du diamètre du fil d'enroulement.

8. Moteur électrique selon au moins l'une des revendications précédentes,
**caractérisé par le fait que**
le capuchon d'extrémité (12) prévu au niveau de la première région extrême axiale du segment individuel, et le capuchon d'extrémité (30) prévu au niveau de la seconde région extrême axiale dudit segment individuel, sont reliés à l'aide d'au moins deux membrures de liaison ou à l'aide d'au moins une membrure de liaison dont la largeur est au moins dix fois plus grande, dans la direction radiale, que dans la direction périphérique, ladite ou lesdites membrure(s) de liaison étant prévue(s) dans un ou plusieurs évidement(s) correspondant(s) de l'empilement de tôles (13).

9. Moteur électrique selon au moins l'une des revendications précédentes,
**caractérisé par le fait que**
les capuchons d'extrémité (12, 30), et/ou la ou les membrure(s) de liaison, sont produits par enrobage injecté de l'empilement de tôles (13), lesdits capuchons d'extrémité (12, 30) et une membrure de liaison présentant, en particulier, une réalisation monobloc.

10. Moteur électrique selon au moins l'une des revendications précédentes,
**caractérisé par le fait que**
le capuchon d'extrémité (12) est doté d'un décrochement de maintien (5) prévu pour la liaison, par complémentarité de formes, avec un outil de l'enrouleuse, en particulier au stade de la production de l'enroulement, notamment en vue d'empêcher un ripage dudit capuchon d'extrémité (12) provoqué par des forces engendrées au cours de l'enroulement.

11. Moteur électrique selon au moins l'une des revendications précédentes,
**caractérisé par le fait que**
le carter dudit moteur est une pièce venue d'extrusion en aluminium.

12. Moteur électrique selon au moins l'une des revendications précédentes,
**caractérisé par le fait que**
la membrure de liaison comporte des nervures de renfort s'étendant dans la direction axiale et/ou dans la direction radiale, et faisant notamment saillie dans la direction périphérique.

13. Procédé de fabrication d'un moteur électrique muni d'un carter comportant un évidement qui revêt la forme d'un trou usiné se présentant comme un alésage, dans lequel est inséré un stator composé de segments individuels disposés dans la direction périphérique,
chaque segment individuel incluant un empilement de tôles (13),
sachant que, dans un premier temps, des capuchons d'extrémité (12, 30) sont enfilés sur ledit l'empilement de tôles (13) au niveau des deux extrémités axiales, après quoi le bobinage de chaque segment individuel est exécuté automatiquement, en vue de procurer un enroulement (11),
lequel enroulement (11) est produit au moyen d'un fil métallique d'enroulement,
un capuchon d'extrémité (12) étant muni d'au moins une couronne (1) notamment conçue pour délimiter la région dudit enroulement (11), sachant qu'un canal (2) de pénétration de fil est prévu dans la région de la base de ladite couronne (1), afin de dévier ledit fil d'enroulement,
des striures (3) étant prévues sur ledit capuchon d'extrémité (12), la distance comprise entre une striure (3) et la striure (3) successive dans le sens radial, et le diamètre de l'arrondi de la striure (3) considérée, étant plus petits que le diamètre du fil d'enroulement,
une bague de retenue (50), enfilée sur le stator, comportant des zones (51) de liaison par clipsage qui entretiennent à chaque fois, par complémentarité de formes, la liaison d'un segment individuel,
sachant qu'une température accrue dudit carter du moteur, d'environ 150 °C à 300 °C, est prévue en tant que température d'assemblage au stade de l'insertion dudit stator produit à partir de segments individuels, et dont la cohésion est assurée par des bagues de retenue (50),
la bague de retenue (50) étant fabriquée en une matière plastique qui ne fond pas encore à la température d'assemblage, mais ne présente également plus sa solidité nominale, sachant que, lors de l'insertion du stator dans l'évidement du carter du moteur, ledit stator est inséré conjointement à la bague de retenue (50) à l'état enfilé et, au stade de l'insertion dans ledit évidement, des régions de ladite bague de retenue (50), qui font saillie radialement au-delà de l'alésage, sont comprimées et étalées le long de la direction axiale, entre ledit stator et ledit carter du moteur, permettant ainsi d'obtenir un effet de lubrification et une protection dudit alésage vis-à-vis des arêtes vives de l'empilement de tôles (13),
une fonction de retenue additionnelle étant obtenue par un scellement dudit stator à l'aide d'une masse de scellement, la fonction de retenue dudit carter du moteur étant, de ce fait, par elle-même insuffisante.
